# EUROPEAN PATENT SPECIFICATION

(11) **EP 2 385 649 B1**
(45) Date of publication and mention of the grant of the patent: **03.10.2012**
(21) Application number: 11003670.4
(22) Date of filing: 04.05.2011
(51) Int. Cl.: H04L 5/00

(54) **Method of carrier control format indication**
Verfahren zur Trägersteuerformatanzeige
Procédé d'indication de format de contrôle de support

(30) Priority: 04.05.2010 US 331366 P
(43) Date of publication of application: 09.11.2011
(73) Proprietor: HTC Corporation, Taoyuan County 330 (TW)
(72) Inventor: Li, Chi-Fang, Taoyuan City Taoyuan County 330 (TW)
(74) Representative: Klang, Alexander H.

(56) References cited:
- LG ELECTRONICS INC: "PDSCH Starting Symbol Indication in Cross-Carrier Scheduling", 3GPP DRAFT; R1-102364-PCFICH_CA_LG_RAN1-60B_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419588, [retrieved on 2010-04-06]
- SHARP: "Implicit indication of cross-carrier control region", 3GPP DRAFT; R1-102391, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06), XP050419610, [retrieved on 2010-04-06]
- SHARP: "Implicit indication of cross-carrier control region", 3GPP DRAFT; R1-101371, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418856, [retrieved on 2010-02-16]

## Description

The application relates to a method utilized in a wireless communication and a communication device thereof, and more particularly, to a method of carrier control format indication in a wireless communication system and a related communication device.

A long-term evolution (LTE) system, initiated by the third generation partnership project (3GPP), is now being regarded as a new radio interface and radio network architecture that provides a high data rate, low latency, packet optimization, and improved system capacity and coverage. In the LTE system, an evolved universal terrestrial radio access network (E-UTRAN) includes a plurality of evolved Node-Bs (eNBs) and communicates with a plurality of mobile stations, also referred as user equipments (UEs).

Toward advanced high-speed wireless communication system, such as transmitting data in a higher peak data rate, LTE-Advanced is standardized by the 3rd Generation Partnership Project (3GPP) as an enhancement of LTE system. LTE-Advanced targets faster switching between power states, improves performance at the cell edge, and includes subjects, such as bandwidth extension, coordinated multipoint transmission/reception (COMP), uplink multiple input multiple output (MIMO), etc.

For bandwidth extension, carrier aggregation (CA) is introduced to the LTE-Advanced for extension to wider bandwidth, where two or more component carriers are aggregated, for supporting wider transmission bandwidths (for example up to 100MHz) and for spectrum aggregation. According to carrier aggregation capability, multiple component carriers are aggregated into overall wider bandwidth, where the UE can establish multiple links corresponding to the multiple component carriers for simultaneously receiving and/or transmitting.

In the LTE-Advanced system, each component carrier has its own control region, and a data region. The control region carries downlink control signaling, such as downlink assignment and uplink grant, which is transmitted through a downlink control information (DCI) format carried in a physical downlink control channel (PDCCH) of the component carrier. On the other hand, the data region carries system data, user data, and/or other information, which is transmitted in a Physical Downlink Shared Channel (PDSCH) of the component carrier. A carrier indicator field (CIF) is required to implement the carrier cross-scheduling. The CIF may be included in a DCI format to facilitate transmission of PDCCH from a first component carrier other than a second component carrier for PDSCH transmission. Therefore, after decoding the carrier indicator field, the UE obtains knowledge upon which component carrier (or called target component carrier) that actual PDSCH data are transmitted.

Moreover, the control region size of the component carrier is indicated in a Physical Control Format Indicator Channel (PCFICH). More specifically, the PCFICH carries a control format indicator (CFI) to indicate the number of orthogonal frequency division multiplexing (OFDM) symbols for transmission of the PDCCH in a subframe. Note that, the control region size indicated by the control format indicator may be varied because the load on the PDCCH is varied. For example, the PCFICH indicates that the CFI= 1, 2, or 3 in each subframe (namely the PDCCH occupies 1, 2, or 3 OFDM symbols). Since the number of OFDM symbols in a subframe is fixed, the data region size is related to the control region size. For example, a subframe includes 7 OFDM symbols, and if the CFI=3, the data region size occupies 4 OFDM symbols.

However, when a component carrier is cross-scheduled, PDSCH for this component carrier is transmitted on another component carrier as PDCCH is. Under cross-scheduling situation, the UE does not decode the PCFICH in the cross-scheduled component carrier to obtain control region size or CFI, and thereby does not know the starting point of data in the cross-scheduled component carrier. Correctly receiving a cross-scheduled DL assignment or UL grant (namely the downlink control information) requires correct decoding of PCFICH and PDCCH on that component carrier. After decoding the PCFICH and PDCCH on that component carrier, the UE obtains downlink control information (i.e. DCI) for the cross-scheduled component carrier and CFI of that component carrier.

Further attention is drawn to document LG ELECTRONICS INC: "PDSCH Starting Symbol Indication in Cross-Carrier Scheduling", 3GPP DRAFT; R1-102364-PCFICH_CA_LG_RAN 1-60B_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 which discloses details of PDSCH starting symbol indication in cross-carrier scheduling.

Another document SHARP: "Implicit indication of cross-carrier control region", 3GPP DRAFT; R1-102391, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Beijing, china; 20100412, 6 April 2010 (2010-04-06) discloses the implicit indication of cross-carrier control regions.

This is mind, the present invention aims at providing a method and related communication device of carrier control format indication under carrier aggregation, for handling downlink control information and control format indicator of a cross-scheduled component carrier.

This is achieved by a method carrier control format indication under carrier aggregation in a wireless communication system according to claims 1 and 5. The dependent claims pertain to corresponding further developments and improvements.

As will be seen more clearly from the detailed description following below, the claimed method of carrier control format indication under carrier aggregation in a wireless communication system comprises indicating that a control format indicator (CFI) indicating a control region size of a first component carrier is dynamically changed subframe by subframe, in the first component carrier, when the first component carrier of the plurality of component carriers is configured with a cross-scheduled operation.

In the following, the invention is further illustrated by way of example, taking reference to the accompanying drawings. Thereof

Fig. 1 is a schematic diagram of a wireless communication system.

Fig. 2 is a schematic diagram of an exemplary communication device according to an embodiment.

Fig. 3- Fig. 7 are flowcharts of exemplary processes.

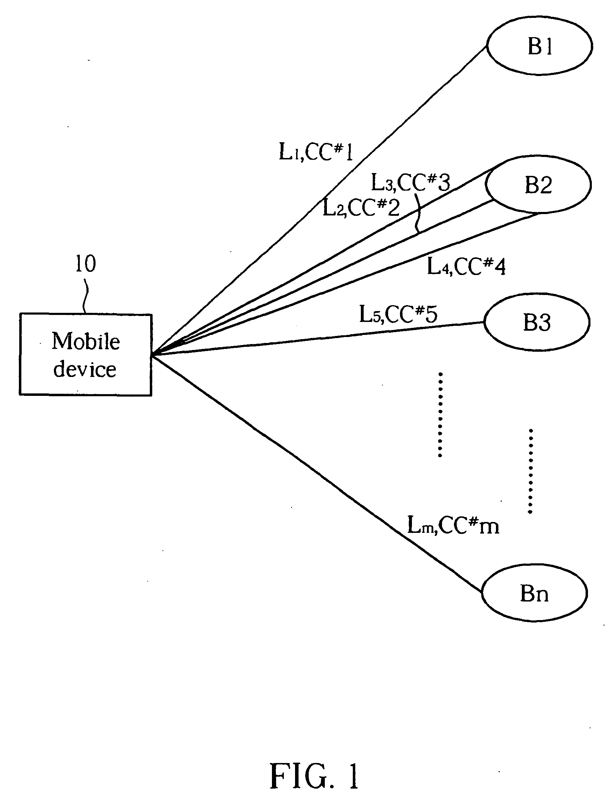

Please refer to Fig. 1, which illustrates a schematic diagram of a wireless communication system featuring multiple connections between a mobile device 10 and base stations B1-Bn. The wireless communication system may be a LTE-Advanced system (i.e. an evolved universal terrestrial radio access network (E-UTRAN)) or any other similar network system (e.g. Worldwide Interoperability for Microwave Access (WiMAX)). The mobile device 10 can operate with carrier aggregation. In Fig. 1, the mobile device 10 communicates with the base stations B1-Bn through radio links L₁-Lₘ that correspond to component carriers cc#1-cc#m configured in the mobile device 10 respectively. Each of the component carriers cc#1-cc#m corresponds to a radio frequency (RF) channel whose bandwidth may be varied according to different communication systems. In addition, the mobile device 10 is referred to as a user equipment (UE) or a mobile station (MS), and can be a device such as a mobile phone, a computer system, etc.

Note that, any of the component carriers cc#1-cc#m may be configured with a cross-scheduled operation. Therefore, a physical downlink control channel (PDCCH) for a cross-scheduled component carrier (e.g. component carrier cc#1) is transmitted on another component carrier (e.g. component carrier cc#2). That is, control signal for user data on one component carrier is transmitted on a different component carrier. In addition, a carrier indicator field (CIF) may be included in a downlink control information (DCI) carried in the PDCCH, for indicating a target component carrier to the UE, so that the UE knows which component carrier is used for the PDSCH transmission. This shall be well-known in the art, so the detailed is not given herein.

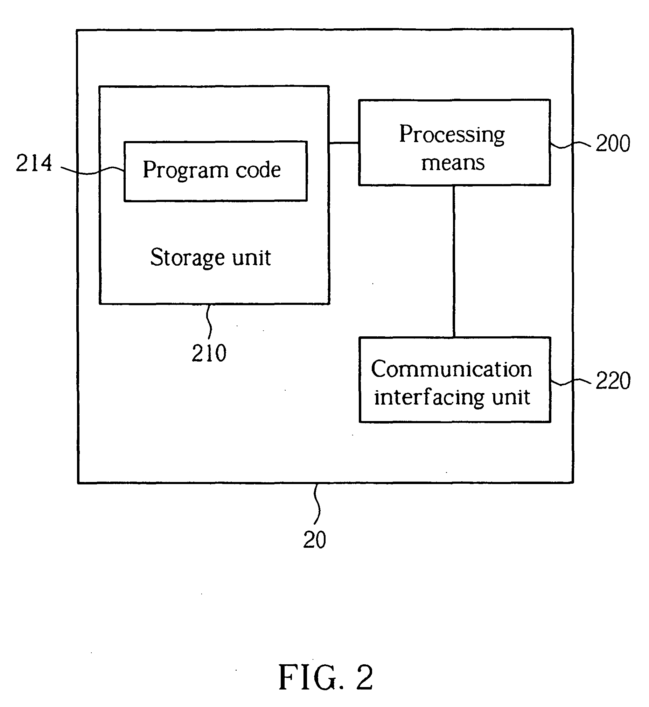

Fig. 2 illustrates a schematic diagram of an exemplary communication device 20. The communication device 20 can be the mobile device 10 or a network (e.g. the base station) shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that can store program code 214, for access by the processing means 200. Examples of the storage unit 210 include but are not limited to a subscriber identity module (SIM), read-only memory (ROM), flash memory, random-access memory (RAM), CD-ROMs, magnetic tape, hard disk, and optical data storage device. The communication interfacing unit 220 is preferably a radio transceiver and can exchange wireless signals with the network according to processing results of the processing means 200.

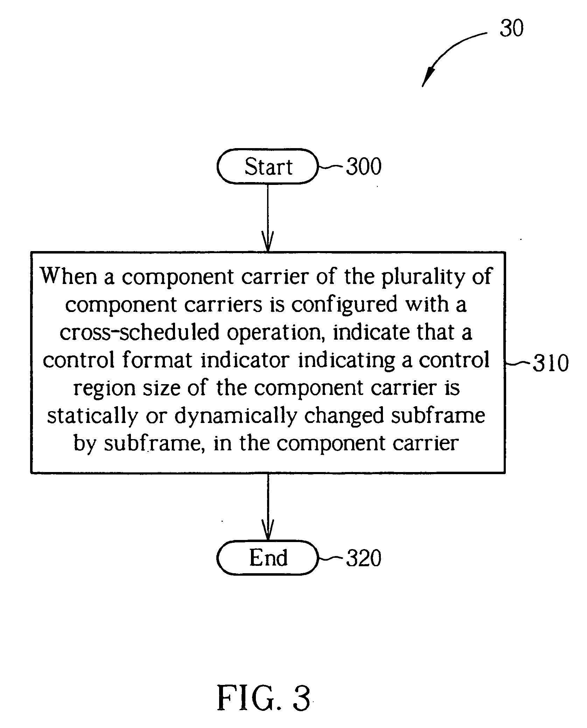

Please refer to Fig. 3, which illustrates a flowchart of an exemplary process 30. The process 30 is utilized for handling control format indication of a cross-scheduled component carrier. The process 30 can be compiled into the program code 214 and includes the following steps:

Step 300: Start.

Step 310: When a component carrier of the plurality of component carriers is configured with a cross-scheduled operation, indicate that a control format indicator indicating a control region size of the component carrier is dynamically changed subframe by subframe, in the component carrier.

Step 320: End.

According to the process 30, the control format indicator (hereafter called CFI) is indicated dynamically changed subframe by subframe in a cross-scheduled component carrier. Therefore, the UE/network obtains information about control region size of the cross-scheduled component carrier or starting point in the cross-scheduled component carrier. Moreover, since the load of the PDCCH is varied, a method for handling the CFI in a cross-scheduled component carrier is necessary.

Referring back to Fig. 1, let's take an example based on the process 30. Assume that the component carrier cc#1 is cross-scheduled on the component carrier cc#2 (namely PDCCH carrying a DCI for the component carrier cc#1 is transmitted on the component carrier cc#2), and PDSCH for the component carrier cc#1 is transmitted on the component carrier cc#2 (knowing via a CIF). Under cross-scheduling situation, a signal or a bit in the DCI for indicating that a CFI of the component carrier cc#1 is dynamic is sent in the component carrier cc#1. On the other hand, the signal may be jointly encoded with the CIF. For example, the CIF is a 3 bit field. 1 of the 3 bit can be used for indicating that the CFI is dynamic, or at least an additional bit is increased to the CIF, so that the additional bit can be used for indicating that the CFI is dynamic.

In a static case, the CFI is a pre-scheduled or assumed value used as a default value, a fixed value (e.g. CFI=3) given for both UE and network (i.e. an eNB), a value that is scheduled through a radio resource control (RRC) configuration or reconfiguration, or follows the latest updated value. On the other hand, in the dynamic case according to the present invention, the CFI may be obtained from a certain signal else in previous or current subframes, from a Physical Control Format Indicator Channel (PCFICH) on a component carrier transmitting the PDCCH (e.g. the component carrier cc#2) or on a component carrier transmitting the PDSCH (e.g. the component carrier cc#3).

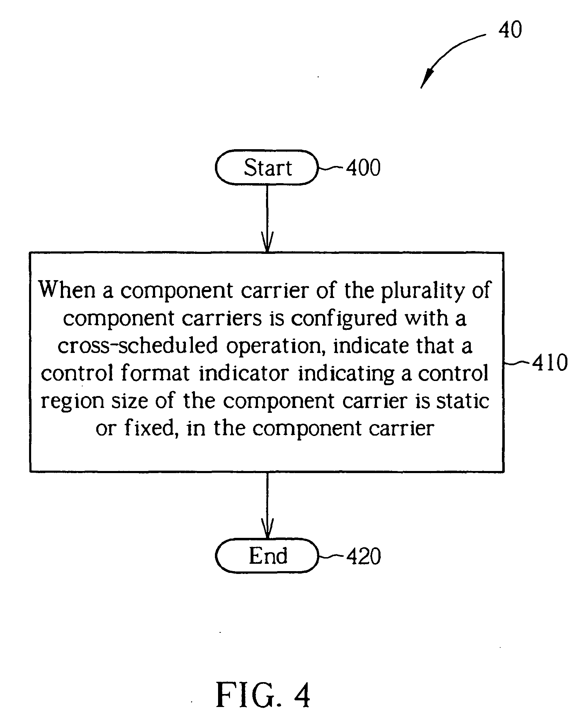

Please refer to Fig. 4, which illustrates a flowchart of an exemplary process 40. The process 40 is utilized for handling control formation indication of a cross-scheduled component carrier. The process 40 can be compiled into the program code 214 and includes the following steps:

Step 400: Start.

Step 410: When a component carrier of the plurality of component carriers is configured with a cross-scheduled operation, indicate that a control format indicator indicating a control region size of the component carrier is static or fixed, in the component carrier.

Step 420: End.

According to the process 40, the CFI is indicated static or fixed in a cross-scheduled component carrier. Therefore, the UE/netowrk obtains information about control region size of the cross-scheduled component carrier or starting point in the cross-scheduled component carrier. Moreover, since the load of the PDCCH is varied, a method for handling the CFI in a cross-scheduled component carrier is necessary.

Referring back to Fig. 1, let's take an example based on the process 40. Assume that the component carrier cc#1 is cross-scheduled on the component carrier cc#2 (namely PDCCH carrying a DCI for the component carrier cc#1 is transmitted on the component carrier cc#2), and PDSCH for the component carrier cc#1 is transmitted on the component carrier cc#2 (knowing via a CIF). Under cross-scheduling situation, a signal or a bit in the DCI for indicating that a CFI of the component carrier cc#1 is static or fixed is sent in the component carrier cc#1. On the other hand, the signal may be jointly encoded with the CIF. For example, the CIF is a 3 bit field. 1 of the 3 bit can be used for indicating that the CFI is static or fixed, or at least an additional bit is increased to the CIF, so that the additional bit can be used for indicating that the CFI is static or fixed.

In static case, the CFI is a pre-scheduled or assumed value used as a default value, a value that is scheduled through a radio resource control (RRC) configuration or reconfiguration, or follows the latest updated value. On the other hand, in fixed case, the CFI is a fixed value (e.g. CFI=3 or 4). Therefore, the UE knows that the CFI value or a control region size of the cross-scheduled component carrier, as well as the starting point in the cross-scheduled component carrier.

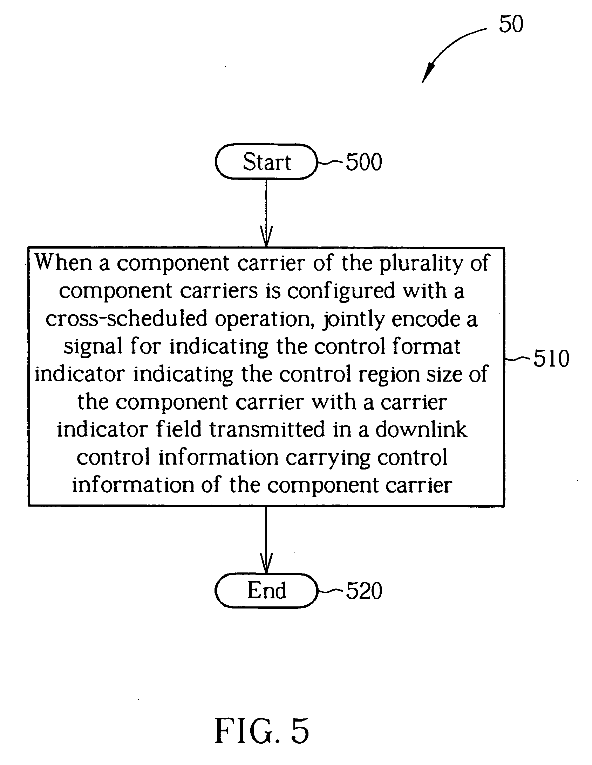

Please refer to Fig. 5, which illustrates a flowchart of an exemplary process 50. The process 50 is utilized for handling control formation indication of a cross-scheduled component carrier. The process 50 can be compiled into the program code 214 and includes the following steps:

Step 500: Start.

Step 510: When a component carrier of the plurality of component carriers is configured with a cross-scheduled operation, jointly encode a signal for indicating the control format indicator indicating the control region size of the component carrier with a carrier indicator field transmitted in a downlink control information carrying control information of the component carrier.

Step 520: End.

According to the process 50, a signal for indicating a CFI of the cross-scheduled component carrier is jointly encoded with the CIF. The signal for indicating the CFI may indicate a static, dynamic, updated, or fixed control format indicator. For example, the CIF is a 3 bits filed. The first 2 bits can be used for indicating a component carrier for PDSCH transmission, and the last bit is used for indicating a value of the CFI. Or, at least an additional bit is increased to the CIF, and thereby all the additional bits are used for indicating the value of the CFI. Thus, the UE obtains information about control region size of the cross-scheduled component carrier or starting point in the cross-scheduled component carrier.

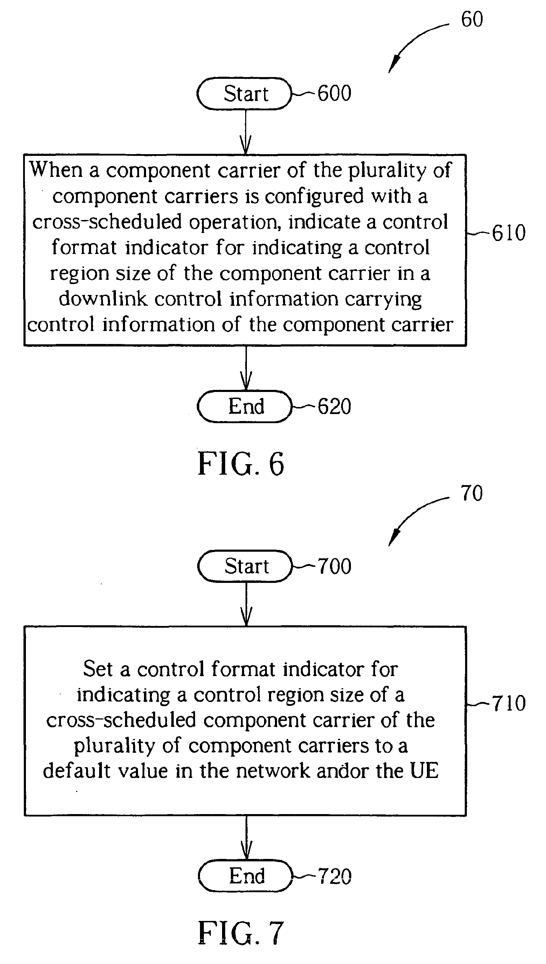

Please refer to Fig. 6, which illustrates a flowchart of an exemplary process 60. The process 60 is utilized for handling control formation indication of a cross-scheduled component carrier. The process 60 can be compiled into the program code 214 and includes the following steps:

Step 600: Start.

Step 610: When a component carrier of the plurality of component carriers is configured with a cross-scheduled operation, indicate a control format indicator for indicating a control region size of the component carrier in a downlink control information carrying control information of the component carrier.

Step 620: End.

According to the process 60, a CFI is indicated in a DCI, and thereby the UE obtains information about control region size of the cross-scheduled component carrier or starting point in the cross-scheduled component carrier. To achieve this, an individual field is used to indicate the CFI is included in the DCI. The individual field can be at least a bit. For example, when the field is 1 bit, 2 possible values for the CFI is represent, when the field is 2 bits, 4 possible values for the CFI is represent, and so on. In other words, there is a certain mapping relationship between the CFI value and bit values of the field.

More specifically, if the field contains 2 bits, the 2 bits may represent CFI values 0-3. For example, if the 2 bits in the field is "00", which maps to CFI=0 (namely control region size is zero, and all OFDM symbols are used for PDSCH data transmission, or it can be reserved as other purpose), or "01" maps to CFI=1, "10" maps to CFI=2, and "11" maps to CFI=3. On the other hand, the 2 bits can be represent other CFI values (e.g. CFI=1-4). Those skilled in the art can make alternative modifications, and it is not limited herein.

Please refer to Fig. 7, which illustrates a flowchart of an exemplary process 70. The process 70 is utilized for handling control formation indication of a cross-scheduled component carrier. The process 70 can be compiled into the program code 214 and includes the following steps:

Step 700: Start.

Step 710: Set a control format indicator for indicating a control region size of a cross-scheduled component carrier of the plurality of component carriers to a default value in the network and/or the UE.

Step 720: End.

According to the process 70, the network and UE both have a default value of a CFI. The default value can be a pre-defined value, a value decided by the network (i.e. an eNB) and informed to the UE, or a value that can be known in both the eNB and the UE. Therefore, the UE/network uses the pre-scheduled value for the CFI, and obtains information about control region size of the cross-scheduled component carrier or starting point in the cross-scheduled component carrier.

Please note that, the abovementioned steps of the processes including suggested steps can be realized by means that could be hardware, firmware known as a combination of a hardware device and computer instructions and data that reside as read-only software on the hardware device, or an electronic system. Examples of hardware can include analog, digital and mixed circuits known as microcircuit, microchip, or silicon chip. Examples of the electronic system can include system on chip (SOC), system in package (Sip), computer on module (COM), and the communication device 20.

In conclusion, the exemplary examples and means are provided for handling carrier control formation indication for the UE and/or network, so as to obtain starting point of data in the cross-scheduled component carrier.

## Claims

1. A method of carrier control format indication under a carrier aggregation, which aggregates a plurality of component carriers for a transmission between a network and a user equipment of a wireless communication system, the method comprising:
when a first component carrier of the plurality of component carriers is configured with a cross-scheduled operation, whereby a control signal for user data on the first component carrier is transmitted on a second component carrier of the plurality of component carriers, indicating that a control format indicator, CFI, indicating a control region size of the first component carrier is dynamically changed subframe by subframe, in the first component carrier.

2. The method of claim 1, wherein when the first component carrier of the plurality of component carriers is configured with the cross-scheduled operation, indicating that the control format indicator indicating the control region size of the first component carrier is dynamically changed subframe by subframe comprises:
sending a signal for indicating that the control format indicator indicating the control region size of the first component carrier is dynamically changed subframe by subframe when the first component carrier of the plurality of component carriers is configured with the cross-scheduled operation; or
sending a bit in a downlink control information, DCI carrying control information of the first component carrier for indicating that the control format indicator indicating the control region size of the first component carrier is dynamically changed subframe by subframe when the first component carrier of the plurality of component carriers is configured with the cross-scheduled operation.

3. The method of claim 2, wherein sending the signal for indicating that the control format indicator indicating the control region size of the first component carrier is dynamically changed subframe by subframe when the first component carrier of the plurality of component carriers is configured with the cross-scheduled operation comprising:
jointly encoding the signal with a carrier indicator field, CIF, transmitted in the downlink control information.

4. The method of claim 1, wherein
the control format indicator is obtained from a dedicated signal else in a previous or current subframe, is obtained from a Physical control format indicator channel, PCFICH, on the second component carrier, or is obtained from the PCFICH on the first component carrier.

5. A method of carrier control format indication under a carrier aggregation, which aggregates a plurality of component carriers for a transmission between a network and a user equipment of a wireless communication system, the method comprising:
when a first component carrier of the plurality of component carriers is configured with a cross-scheduied operation, whereby a control signal for user data on the first component carrier is transmitted on a second component carrier of the plurality of component carriers, indicating that a control format indicator, CFI, indicating a control region size of the first component carrier is static or fixed, in the first component carrier.

6. The method of claim 5, wherein when the first component carrier of the plurality of component carriers is configured with the cross-scheduled operation, indicating that the control format indicator indicating the control region size of the first component carrier is static or fixed comprises:
sending a signal to indicate that the control format indicator indicating the control region size of the first component carrier is static or fixed when the first component carrier of the plurality of component carriers is configured with the cross-scheduled operation; or
sending a bit in a downlink control information, DCI, carrying control information of the first component carrier to indicate that the control format indicator indicating the control region size of the first component carrier is static or fixed when the first component carrier of the plurality of component carriers is configured with the cross-scheduled operation.

7. The method of claim 6, wherein sending the signal for indicating that the control format indicator indicating the control region size of the first component carrier is static or fixed when the first component carrier of the plurality of component carriers is configured with the cross-scheduled operation comprising:
jointly encoding the signal with a carrier indicator field, CIF, transmitted in the downlink control information.

8. The method of claim 5, wherein the control format indicator is a pre-scheduled or assumed value used as a default value, the latest updated value, or a value scheduled through a radio resource control, RRC, configuration or reconfiguration message when the control format indicator is indicated static, and the control format indicator is a fixed value when the control format indicator is indicated fixed.

## Patentansprüche

1. Verfahren zur Trägersteuerinformationsanzeige unter einer Trägeraggregation, welche eine Vielzahl von Komponententrägern für eine Übertragung zwischen einem Netzwerk und einem Teilnehmerendgerät bzw. UE (UE = User Equipment) eines Drahtloskommunikationssystems aggregiert, wobei das Verfahren Folgendes aufweist:
wenn ein erster Komponententräger der Vielzahl von Komponententrägern mit einem quer bzw. über Kreuz eingeteilten Betrieb konfiguriert ist, wobei ein Steuersignal für die Benutzerdaten auf dem ersten Komponententräger auf einem zweiten Komponententräger der Vielzahl von Komponententrägern übertragen wird, Anzeigen, dass ein Steuerformatindikator bzw. CFI (CFI = Control Format Indicator), der eine Steuerbereichsgröße des ersten Komponententrägers anzeigt, dynamisch Unterrahmen für Unterrahmen verändert wird, in einem ersten Komponententräger.

2. Verfahren gemäß Anspruch 1, wobei wenn der erste Komponententräger der Vielzahl von Komponententrägern mit dem über Kreuz eingeteilten Betrieb konfiguriert ist, das Anzeigen, dass der Steuerformatindikator, der die Steuerbereichsgröße des ersten Komponententrägers anzeigt, dynamisch Unterrahmen für Unterrahmen verändert wird, Folgendes aufweist:
Senden eines Signals zur Anzeige, dass der Steuerformatindikator, der die Steuerbereichsgröße des ersten Komponententrägers anzeigt, dynamisch Unterrahmen für Unterrahmen verändert wird, wenn der erste Komponententräger der Vielzahl von Komponententrägern mit dem über Kreuz eingeteilten Betrieb konfiguriert ist; oder
Senden eines Bits in einer Downlink-Steuerinformation bzw. DCI (DCI = Downlink Control Information), die die Steuerinformation des ersten Komponententrägers trägt, um anzuzeigen, dass der Steuerformatindikator, der die Steuerbereichsgröße des ersten Komponententrägers anzeigt, dynamisch Unterrahmen für Unterrahmen verändert wird, wenn der erste Komponententräger der Vielzahl von Komponententräger mit dem über Kreuz eingeteilten Betrieb konfiguriert ist.

3. Verfahren gemäß Anspruch 2, wobei das Senden des Signals zum Anzeigen, dass der Steuerformatindikator, der die Steuerbereichsgröße des ersten Komponententrägers anzeigt, dynamisch Unterrahmen für Unterrahmen verändert wird, wenn der erste Komponententräger der Vielzahl von Komponententrägern mit dem über Kreuz eingeteilten Betrieb konfiguriert ist, Folgendes aufweist:
gemeinsames Codieren des Signals mit einem Trägerindikatorfeld bzw. CIF (CIF = Carrier Indicator Field), das in der Downlink-Steuerinformation übertragen wird.

4. Verfahren gemäß Anspruch 1, wobei der Steuerformatindikator aus einem dedizierten Signal sonst in einem vorangehenden oder gegenwärtigen Unterrahmen erhalten wird, aus einem Physischen-Steuerformatindikatorkanal bzw. PCFICH (PCFICH = Physical Control Format Indicator Channel) auf dem zweiten Komponententräger erhalten wird, oder aus dem PCFICH auf dem ersten Komponententräger erhalten wird.

5. Verfahren der Trägersteuerformatanzeige unter einer Trägeraggregation, welche eine Vielzahl von Komponententrägern für eine Übertragung zwischen einem Netzwerk und einem Teilnehmerendgerät bzw. UE eines Drahtloskommunikationssystems aggregiert, wobei das Verfahren Folgendes aufweist:
wenn ein erster Komponententräger der Vielzahl von Komponententrägern mit einem quer bzw. über Kreuz eingeteilten Betrieb konfiguriert ist, wobei ein Steuersignal für die Benutzerdaten auf dem ersten Komponententräger auf einem zweiten Komponententräger der Vielzahl von Komponententrägern übertragen wird, Anzeigen, dass ein Steuerformatindikator bzw. CFI (CFI = Control Format Indicator), der eine Steuerbereichsgröße des ersten Komponententrägers anzeigt, statisch oder fix ist, in dem ersten Komponententräger.

6. Verfahren gemäß Anspruch 5, wobei wenn der erste Komponententräger der Vielzahl von Komponententrägern mit dem über Kreuz eingeteilten Betrieb konfiguriert ist, das Anzeigen, dass der Steuerformatindikator, der die Steuerbereichsgröße des ersten Komponententrägers anzeigt, statisch oder fix ist, Folgendes aufweist:
Senden eines Signals, um anzuzeigen, dass der Steuerformatindikator, der die Steuerbereichsgröße des ersten Komponententrägers anzeigt, statisch oder fix ist, wenn der erste Komponententräger der Vielzahl von Komponententrägern mit dem über Kreuz eingeteilten Betrieb konfiguriert ist; oder
Senden eines Bits in einer Downlink-Steuerinformation bzw. DCI, die die Steuerinformation des ersten Komponententrägers trägt, um anzuzeigen, dass der Steuerformatindikator, der die Steuerbereichsgröße des ersten Komponententrägers anzeigt, statisch oder fix ist, wenn der erste Komponententräger der Vielzahl von Komponententräger mit dem über Kreuz eingeteilten Betrieb konfiguriert ist.

7. Verfahren gemäß Anspruch 6, wobei das Senden des Signals zur Anzeige, dass der Steuerformatindikator, der die Steuerbereichsgröße des ersten Komponententrägers anzeigt, statisch oder fix ist, wenn der erste Komponententräger der Vielzahl von Komponententrägern mit dem über Kreuz eingeteilten Betrieb konfiguriert ist, Folgendes aufweist:
gemeinsames Codieren des Signals mit einem Trägerindikatorfeld bzw. CIF, das in der Downlink-Steuerinformation übertragen wird.

8. Verfahren gemäß Anspruch 5, wobei der Steuerformatindikator ein vorab eingeteilter oder angenommener Wert, der als ein Standardwert verwendet wird, der letzte aktualisierte Wert oder ein Wert ist, der durch eine Funkressourcensteuerungs- bzw. RRC-Konfigurations- (RRC = Radio Resource Control) oder RRC-Neukonfigurationsnachricht eingeteilt wird, wenn der Steuerformatindikator als statisch angezeigt wird, und der Steuerformatindikator ein fester Wert ist, wenn der Steuerformatindikator als fix bzw. festgelegt angezeigt wird.

## Revendications

1. Procédé d'indication de format de contrôle de porteuse dans une concaténation de porteuses qui concatène une pluralité de porteuses de composantes pour une transmission entre un réseau et un équipement d'utilisateur d'un système de communication sans fil, le procédé comprenant :
quand une première porteuse de composantes de la pluralité de porteuses de composantes est configurée pour un mode de fonctionnement croisé, dans lequel un signal de contrôle pour des données d'utilisateur sur la première porteuse de composantes est transmis sur une seconde porteuse de composantes de la pluralité de porteuses de composantes, indiquer qu'un indicateur de format de contrôle, CFI, indiquant une dimension de région de contrôle de la première porteuse de composantes, est changé dynamiquement sous-trame par sous-trame dans la première porteuse de composantes.

2. Procédé selon la revendication 1, dans lequel, quand la première porteuse de composantes de la pluralité de porteuses de composantes est configurée pour le mode de fonctionnement croisé, l'indication que l'indicateur de format de contrôle indiquant la dimension de la région de contrôle de la première porteuse de composantes est modifié dynamiquement sous-trame par sous-trame, comprend :
envoyer un signal pour indiquer que l'indicateur de format de contrôle indiquant la dimension de la région de contrôle de la première porteuse de composantes est modifié dynamiquement sous-trame par sous-trame quand la première porteuse de composantes de la pluralité de porteuses de composantes est configurée pour le mode de fonctionnement croisé, ou
envoyer un bit dans une information de contrôle descendante, DCI, transportant des informations de contrôle de la première porteuse de composantes pour indiquer que l'indicateur de format de contrôle indiquant la dimension de la région de contrôle de la première porteuse de composantes est modifié dynamiquement sous-trame par sous-trame quand la première porteuse de composantes de la pluralité de porteuses de composantes est configurée pour le mode de fonctionnement croisé.

3. Procédé selon la revendication 2, dans lequel l'envoi du signal indiquant que l'indicateur de format de contrôle indiquant la dimension de la région de contrôle de la première porteuse de composantes est modifié dynamiquement sous-trame par sous-trame quand la première porteuse de composantes de la pluralité de porteuses de composantes est configurée pour le mode de fonctionnement croisé, comprend :
coder conjointement le signal avec un champ d'indicateur de porteuse, CIF, transmis dans les informations de contrôle descendantes.

4. Procédé selon la revendication 1, dans lequel l'indicateur de format de contrôle est obtenu à partir d'un signal dédié ailleurs dans une sous-trame précédente ou courante, est obtenu à partir d'un canal physique indicateur de format de contrôle, PCFICH, sur la seconde porteuse de composantes, ou est obtenu à partir du PCFICH sur la première porteuse de composantes.

5. Procédé d'indication de format de contrôle de porteuse dans une concaténation de porteuses qui concatène une pluralité de porteuses de composantes pour une transmission entre un réseau et un équipement d'utilisateur d'un système de communication sans fil, le procédé comprenant :
quand une première porteuse de composantes de la pluralité de porteuses de composantes est configurée pour un mode de fonctionnement croisé, dans lequel un signal de contrôle pour des données d'utilisateur sur la première porteuse de composantes est transmis sur une seconde porteuse de composantes de la pluralité de porteuses de composantes, indiquer qu'un indicateur de format de contrôle, CFI, indiquant une dimension de région de contrôle de la première porteuse de composantes, est statique ou fixe, dans la première porteuse de composantes.

6. Procédé selon la revendication 5, dans lequel, quand la première porteuse de composantes de la pluralité de porteuses de composantes est configurée pour le mode de fonctionnement croisé, l'indication que l'indicateur de format de contrôle indiquant la dimension de la région de contrôle de la première porteuse de composantes est statique ou fixe, comprend :
envoyer un signal pour indiquer que l'indicateur de format de contrôle indiquant la dimension de la région de contrôle de la première porteuse de composantes est statique ou fixe quand la première porteuse de composantes de la pluralité de porteuses de composantes est configurée pour le mode de fonctionnement croisé, ou
envoyer un bit dans une information de contrôle descendante, DCI, transportant des informations de contrôle de la première porteuse de composantes pour indiquer que l'indicateur de format de contrôle indiquant la dimension de la région de contrôle de la première porteuse de composantes est statique ou fixe quand la première porteuse de composantes de la pluralité de porteuses de composantes est configurée pour le mode de fonctionnement croisé.

7. Procédé selon la revendication 6, dans lequel l'envoi du signal indiquant que l'indicateur de format de contrôle indiquant la dimension de la région de contrôle de la première porteuse de composantes est statique ou fixe quand la première porteuse de composantes de la pluralité de porteuses de composantes est configurée pour le mode de fonctionnement croisé, comprend :
coder conjointement le signal avec un champ d'indicateur de porteuse, CIF, transmis dans les informations de contrôle descendantes.

8. Procédé selon la revendication 5, dans lequel l'indicateur de format de contrôle est une valeur préprogrammée ou supposée utilisée comme valeur par défaut, la dernière valeur mise à jour, ou une valeur programmée par un message de configuration ou de reconfiguration de commande de ressources radio, RRC, quand l'indicateur de format de contrôle est indiqué comme statique, et l'indicateur de format de contrôle est une valeur fixe quand l'indicateur de format de contrôle est indiqué comme fixe.
